# EUROPÄISCHE PATENTSCHRIFT

(11) **EP 0 802 538 B1**
(45) Veröffentlichungstag und Bekanntmachung des Hinweises auf die Patenterteilung: **12.03.2003**
(21) Anmeldenummer: 97200990.6
(22) Anmeldetag: 04.04.1997
(51) Int. Cl.: G11B 27/02, G11B 27/00, H04N 7/173

(54) **Videoserver**
Video server
Serveur vidéo

(30) Priorität: 10.04.1996 DE 19614157
(43) Veröffentlichungstag der Anmeldung: 22.10.1997
(73) Patentinhaber: Philips Corporate Intellectual Property GmbH, 20099 Hamburg (DE); Koninklijke Philips Electronics N.V., 5621 BA Eindhoven (NL)
(72) Erfinder: Schmidt, Adam, Röntgenstrasse 24, 22335 Hamburg (DE); Hasenzahl, Markus, Röntgenstrasse 24, 22335 Hamburg (DE)
(74) Vertreter: von Laue, Hanns-Ulrich, Dipl.-Ing.

(56) Entgegenhaltungen:
- EP-A- 0 637 890
- EP-A- 0 653 885
- US-A- 5 133 079
- PATENT ABSTRACTS OF JAPAN vol. 096, no. 006, 28.Juni 1996 & JP 08 032957 A (HITACHI LTD), 2.Februar 1996,

## Beschreibung

Die Erfindung betrifft einen Videoserver mit Speicherkanälen, welche jeweils Datenkanäle für Video-, Audio-, und/oder Timecode-Daten sowie ggf. weitere Daten aufweisen, wobei in einer Grundkonfiguration je einem Speicherkanal jeweils vorgegebene Video-, Audio- und Timecode-Datenkanäle sowie ggf. weitere Datenkanäle zugeordnet sind.

Bei bekannten Magnetaufzeichnungsgeräten und Videoservern sind einem Speicherkanal jeweils vorgegebene, feste Video-, Audio- und ggf. weitere Datenkanäle wie zum Beispiel Timecode-Kanäle zugeordnet. Dabei liegt sowohl fest, um welche konkrete Datenkanäle es sich handelt wie auch deren Anzahl.

Es ist Aufgabe der Erfindung, eine derartigen Videoserver flexibler im Einsatz zu machen.

Diese Aufgabe ist erfindungsgemäß dadurch gelöst, daß die Grundkonfiguration wenigstens teilweise aufhebbar ist und daß virtuelle Speicherkanäle konfigurierbar sind, welchen einzeln beliebige Datenkanäle zuordbar sind, bei denen es sich auch um solche Datenkanäle handeln kann, die gemäß der Grundkonfiguration anderen Speicherkanälen zugeordnet sind.

Alternativ zu der Grundkonfiguration sind virtuelle Speicherkanäle konfigurierbar. Im Gegensatz zu der Grundkonfiguration sind für diese Speicherkanäle beliebige Datenkanäle auswählbar, die den jeweiligen Speicherkanälen zugeordnet werden. Dabei liegt weder fest, um welche konkreten Datenkanäle es sich handeln muß noch ist deren Anzahl fest vorgegeben. Eine einmal getroffene Entscheidung, einem virtuelle Speicherkanal bestimmte Datenkanäle zuzuordnen, muß bis zu deren Wiedergabe beibehalten werden. Die Zuordnung der Datenkanäle in der Grundkonfiguration, in der sie bestimmten Speicherkanälen zugehören, ist für die Zuordnung zu den virtuellen Speicherkanälen unerheblich. Dies bedeutet beispielsweise, daß einem virtuellen Speicherkanal Datenkanäle aus verschiedenen Speicherkanälen gemäß der Grundkonfiguration zuordbar sind.

Es ist damit eine sehr hohe Flexibilität bei der Konfiguration des Videoserver gegeben. So können einem Speicherkanal beispielsweise mehr als die üblichen vier Audiokanäle oder auch ein weiterer Videokanal zugeordnet werden.

Die konfigurierten virtuellen Speicherkanäle sind wie konventionelle Speicherkanäle auf einem Videoserver oder auch einem Magnetbandgerät zu behandeln. Sie sind einander zugeordnet und bieten sehr flexible Speicherungsmöglichkeiten für Video-, Audio-Daten und ggf. weitere Daten wie Timecode-Daten. Der Videoserver bietet mit diesen virtuellen Speicherkanälen, die frei konfigurierbar sind, eine sehr vorteilhafte Anpassungsmöglichkeit an wechselnde Einsatzbedingungen bzw. Erfordernisse.

Gemäß einer Ausgestaltung der Erfindung ist vorgesehen, daß die virtuellen Speicherkanäle aufnahmeseitig frei konfigurierbar sind und daß wiedergabeseitig die aufnahmeseitig konfigurierten virtuellen Speicherkanäle aufrufbar sind, wobei bei wIedergabeseitigem Aufruf eines virtuellen Speicherkanals automatisch die diesem aufnahmseitig zugeordneten Datenkanäle aufgerufen werden.

Ein aufnahmeseitig konfigurierter virtueller Speicherkanal, dem bestimmte Datenkanäle zugeordnet sind, ist wiedergabeseitig wieder als solcher aufrufbar. Dabei werden die aufnahmeseitig dem virtuellen Speicherkanal zugeordneten Datenkanäle wiedergabeseitig bei Aufruf des Speicherkanals wiederum diesem zugeordnet und aufgerufen. Dabei ist unerheblich, ob die Datenkanäle in der Grundkonfiguration anderen Speicherkanälen zugeordnet sind. Damit wird erreicht, daß aufnahmeseitig gebildete Speicherkanäle wiedergabeseitig als solche aufrufbar sind und nicht neu konfiguriert werden müssen.

Nachfolgend wird ein Ausführungsbeispiel anhand der Zeichnung näher erläutert. Es zeigen:
Fig. 1 eine schematische Darstellung dreier Speicherkanäle eines Videoservers in der Grundkonfiguration des Videoservers und
Fig. 2 zwei virtuelle Speicherkanäle des Videoservers, die von der Grundkonfiguration abweichen.

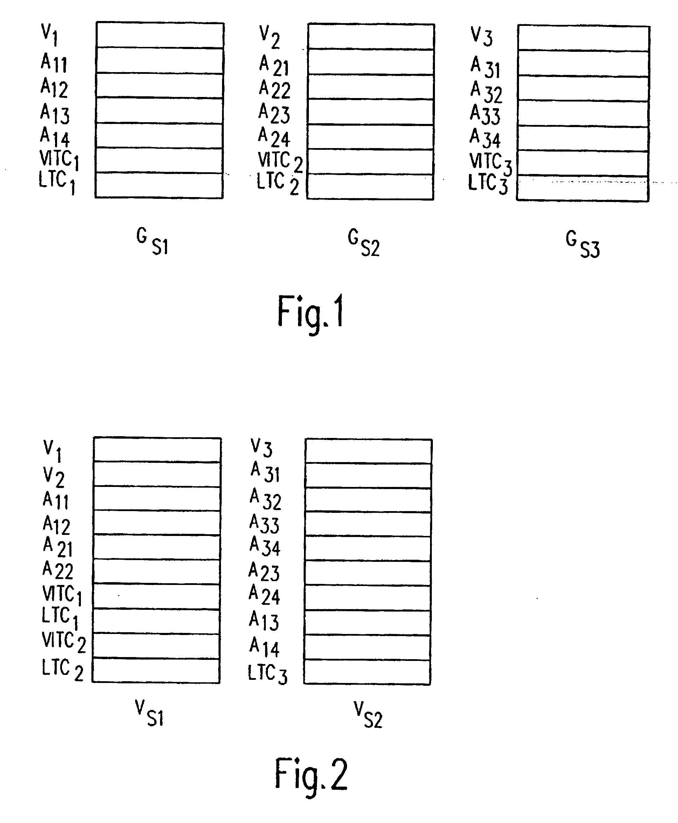

Die schematische Darstellung gemäß Fig. 1 zeigt drei Speicherkanäle G_{S1}, G_{S2} und G_{S3}, die gemäß einer Grundkonfiguration eines in der Fig. 1 nicht näher dargestellten Videoservers vorgesehen sind.

Beispielsweise dem gemäß der Grundkonfiguration vorgesehenen Speicherkanal G_{S1} sind ein Video-Datenkanal V₁, vier Audio-Datenkanäle A₁₁ bis A₁₄ und zwei Timecode-Kanäle VITC₁, LCTC₁ zugeordnet. Diese Zuordnung der Datenkanäle zu dem Speicherkanal ist in der Grundkonfiguration fest. In entsprechender Weise sind in der Grundkonfiguration zwei weitere Speicherkanäle G_{S2} und G_{S3} vorgesehen, die ebenfalls wie der Speicherkanal G_{S1} jeweils einen Video-Datenkanal, vier Audio-Datenkanäle und zwei Timecode-Datenkanäle aufweisen.

Bei Videoservern nach dem Stande der Technik ist diese Grundkonfiguration fest und nicht änderbar. Um eine höhere Flexibilität zu erreichen, ist gemäß der Erfindung vorgesehen, daß die Speicherkanäle umkonfiguriert werden können und daß virtuelle Speicherkanäle konfigurierbar sind, denen beliebige Datenkanäle zugeordnet werden können.

Ein derartiges Beispiel zeigt die schematische Darstellung gemäß Fig. 2.

Gemäß dieser Darstellung ist ein virtueller Speicherkanal V_{S1} gebildet, dem zwei Video-Datenkanäle V₁ und V₂, vier Audio-Datenkanäle A₁₁, A₁₂ und A₂₁ und A₂₂ zugeordnet sind. Ferner sind diesem virtuellen Speicherkanal V_{S1} vier Timecode-Kanäle VITC₁, LTC₁, VITC₂ und LTC₂ zugeordnet.

Damit sind in diesem virtuellen Speicherkanal V₁ Datenkanäle vorgesehen, die gemäß der Grundkonfiguration teilweise in den Speicherkanälen GS₁ und GS₂ vorgesehen sind. Für die gemäß Fig. 2 gebildeten virtuellen Speicherkanäle ist dies jedoch unerheblich. Die Datenkanäle des virtuellen Speicherkanals V_{S1} können in beliebiger Weise genutzt werden; es ist damit ein flexibler Einsatz der Datenkanäle des Videoservers möglich.

Dies wird auch anhand eines in Fig. 2 ebenfalls schematisch angedeuteten virtuellen Speicherkanals V_{S2} deutlich. Dieser virtuelle Speicherkanal V_{S2} ist zusätzlich zu dem virtuellen Speicherkanal V_{S1} gebildet.

Der virtuelle Speicherkanal V_{S2} weist einen Videokanal V₃, jedoch acht Audio-Datenkanäle auf. Es handelt sich dabei um die Datenkanäle A₃₁, A₃₂, A₃₃, A₃₄, A₂₃, A₂₄, A₁₃ und A₁₄. Ferner ist dem virtuellen Speicherkanal V_{S2} ein Timecoder-Datenkanal LTC₃ zugeordnet.

Die Darstellung gemäß Fig. 2 zeigt, daß mittels der virtuellen Speicherkanäle eine sehr individuelle und leicht anpaßbare Konfiguration des Videoservers möglich ist. Im Beispielsfalle des virtuellen Speicherkanals V_{S1} liegt der Schwerpunkt darauf, daß diesem zwei Videokanäle zugeordnet. Im Gegensatz hierzu kennzeichnet sich der virtuelle Speicherkanal V_{S2} unter anderem dadurch, daß ihm acht Audio-Datenkanäle für besondere Einsatzzwecke zugeordnet sind.

In den Beispielen gemäß Fig. 2 sind einem virtuellen Speicherkanal zufällig jeweils zehn Datenkanäle zugeordnet. Grundsätzlich ist jedoch die Zahl der Datenkanäle, die einem virtuellen Speicherkanal zugeordnet werden, frei. Die auf einem Videoserver in der Grundkonfiguration verschiedenen Speicherkanälen zugeordneten Datenkanäle können für die Konfiguration der virtuellen Speicherkanäle beliebig neu umkonfiguriert werden.

## Patentansprüche

1. Videoserver mit Speicherkanälen, welche jeweils Datenkanäle für Video-, Audio-, und/oder Timecode-Daten sowie ggf. weitere Daten aufweisen, wobei in einer Grundkonfiguration je einem Speicherkanal jeweils vorgegebene Video-, Audio- und Timecode-Datenkanäle sowie ggf. weitere Datenkanäle zugeordnet sind, **dadurch gekennzeichnet,**
**daß** die Grundkonfiguration wenigstens teilweise aufhebbar ist und daß virtuelle Speicherkanäle konfigurierbar sind, welchen einzeln beliebige Datenkanäle zuordbar sind, bei denen es sich auch um solche Datenkanäle handeln kann, die gemäß der Grundkonfiguration anderen Speicherkanälen zugeordnet sind.

2. Videoserver nach Anspruch 1, **dadurch gekennzeichnet,**
**daß** die virtuellen Speicherkanäle aufnahmeseitig frei konfigurierbar sind und daß wiedergabeseitig die aufnahmeseitig konfigurierten virtuellen Speicherkanäle aufrufbar sind, wobei bei wIedergabeseitigem Aufruf eines virtuellen Speicherkanals automatisch die diesem aufnahmseitig zugeordneten Datenkanäle aufgerufen werden.

## Claims

1. A video server having storage channels which comprise data channels for video, audio and/or time code data as well as possible further data, in which, in a basic configuration, predetermined video, audio and time code data channels as well as possible further data channels are assigned to each storage channel, **characterized in that** the basic configuration can at least be partly eliminated and **in that** virtual storage channels are configurable, to which arbitrary data channels can be assigned individually, and which may also be data channels which, in accordance with the basic configuration, are assigned to other storage channels.

2. A video server as claimed in claim 1, **characterized in that** the virtual storage channels are freely configurable at the recording end, and said virtual storage channels configured at the recording end can be called at the reproducing end, while the data channels assigned to a virtual storage channel at the recording end are automatically called when said virtual storage channel is called at the reproducing end.

## Revendications

1. Serveur vidéo avec des canaux d'enregistrement qui présentent respectivement des canaux de données pour les données vidéo, audio et/ou timecode ainsi qu'éventuellement d'autres données, des canaux de données vidéo, audio et timecode ainsi qu'éventuellement d'autres canaux de données étant respectivement affectés dans une configuration de base à un canal d'enregistrement, **caractérisé en ce**
**que** la configuration de base peut être supprimée, du moins en partie, et qu'il est possible de configurer des canaux d'enregistrement virtuels auxquels peuvent être affectés des canaux de données quelconques individuels, auquel cas il s'agit de canaux de données tels qu'ils sont affectés à d'autres canaux d'enregistrement conformément à la configuration de base.

2. Serveur vidéo selon la revendication 1, **caractérisé en ce**
**que** les canaux d'enregistrement virtuels peuvent être configurés librement côté enregistrement et que les canaux d'enregistrement virtuels configurés côté enregistrement peuvent être consultés côté lecture, les canaux de données affectés à celui-ci côté enregistrement étant consultés automatiquement en cas d'appel côté lecture d'un canal d'enregistrement virtuel.
